# EUROPEAN PATENT APPLICATION

(11) **EP 4 174 466 A1**
(43) Date of publication of application: **03.05.2023**
(21) Application number: 20943596.5
(22) Date of filing: 26.11.2020
(51) Int. Cl.: G01L 5/28

(54) **MAGNETIC RAIL BRAKE SUCTION TESTING SYSTEM AND METHOD**

(30) Priority: 29.06.2020 CN 202010602700
(71) Applicant: CRRC Zhuzhou Locomotive Co., Ltd., Zhuzhou, Hunan 412001 (CN)
(72) Inventor: LIU, Dexue, Zhuzhou, Hunan 412001 (CN); AI, Zhengwu, Zhuzhou, Hunan 412001 (CN); KANG, Jian, Zhuzhou, Hunan 412001 (CN); LI, Jie, Zhuzhou, Hunan 412001 (CN); WU, Shiying, Zhuzhou, Hunan 412001 (CN); ZOU, Wei, Zhuzhou, Hunan 412001 (CN)
(74) Representative: Ran, Handong
(86) International application number: PCT/CN2020/131787
(87) International publication number: WO 2022/000966

(57) **Abstract**

A magnetic rail brake suction testing system and method. The system comprises a mounting base (8), wherein a plurality of mounting pads (1) for supporting a magnetic rail brake are mounted at the top of the mounting base (8), a driving cylinder (7) is vertically mounted at the lower portion of the mounting base (8), a piston rod of the driving cylinder (7) is arranged upwards, a steel rail (2) is mounted at the top of the piston rod of the driving cylinder (7), and a force sensor (9) is mounted between the steel rail (2) and the piston rod. The force sensor (9) is used for measuring the maximum pulling force borne by the whole steel rail (2), and the suction force of the magnetic rail brake can be directly obtained, so that conversion is not needed, the result is accurate and efficient, and the measuring method is convenient and fast.

## Description

### FIELD OF THE INVENTION

The present invention relates to a braking system of a rail transit vehicle, in particular to a magnetic rail brake suction force testing system and method.

### BACKGROUND OF THE INVENTION

The magnetic rail brake is an indispensable braking component for safe braking in a braking system of rail transit equipment. Electromagnetic suction force is a key technical index of the magnetic rail brake, and the magnitude of the suction force directly affects the braking distance of a rail vehicle. Therefore, efficient and convenient measurement of the suction force of the magnetic rail brake is of great significance to the safety of service braking.

At present, there are many methods for measuring the suction force of the magnetic rail brake. The commonly used measuring method is to measure a suction force of a small section of the magnetic rail brake with a tension meter and a force sensor, and then to obtain a suction force of the magnetic rail brake by the proportion of the length of the small section to the entire length of the magnetic rail brake. However, magnetic flux densities in different positions along the entire length direction of the magnetic rail brake are different, the suction force obtained by the proportion is not necessarily accurate. For an articulated magnetic rail brake, magnetic flux densities in different positions along the entire length direction of are more obviously different.

### SUMMARY OF THE INVENTION

The technical problem to be solved by the present invention is, aiming at the deficiency that the suction force of a magnetic rail brake measured in the prior art is inaccurate, to provide a magnetic rail brake suction testing system and method that can measure the suction force of a magnetic rail brake more efficiently and conveniently, so as to ensure safety and reliability of the service braking of a rail transit vehicle.

In order to solve the above technical problems, the present invention provides a magnetic rail brake suction testing system, including a mounting base, a plurality of mounting pads for supporting a magnetic rail brake are mounted at the top of the mounting base, a driving cylinder is vertically mounted at the lower part of the mounting base, a piston rod of the driving cylinder is arranged upwards, a steel rail is mounted at the top of the piston rod of the driving cylinder, and a force sensor is mounted between the steel rail and the piston rod.

The present invention uses the suction and separation process of the integral steel rail and a magnetic pole of the magnetic rail brake to simulate the suction and separation process of the magnetic pole of the magnetic rail brake and a rail in actual operation of the rail vehicle, and uses the force sensor to measure the maximum pulling force borne by the integral steel rail when separating the integral steel rail from the magnetic pole of the magnetic rail brake, so as to directly obtain a suction force of the magnetic rail brake, which conveniently realizes measurement of the suction force of the overall magnetic rail brake, and ensures the safety and reliability of service braking of a rail transit vehicle. Compared to the traditional method that first measures an electromagnetic suction force per unit length and then obtains a total suction force of the entire magnetic rail brake according to the proportional relationship between the unit length and the total length of the magnetic rail brake, the present invention prevents the difference of magnetic flux densities in different positions along the entire length direction of the magnetic rail brake from affecting the measurement result, so that the measurement result is more accurate and efficient.

Preferably, the lower part of the steel rail is mounted on a steel rail base, and the steel rail base is fixedly connected to the piston rod of the driving cylinder. Of course, the steel rail may also be integrally formed with the steel rail base.

Preferably, a displacement sensor for detecting whether a distance between the steel rail and the magnetic pole of the magnetic rail brake reaches a normal working clearance of a magnetic pole of the magnetic rail brake is arranged on the mounting base.

Preferably, the upper surface of the mounting base is provided with a rectangular groove, and the steel rail can smoothly pass through the rectangular groove.

Preferably, the driving cylinder is an oil cylinder, an air cylinder, or an electric push rod.

In order to ensure the uniform change of the pulling force value in the force measurement process and eliminate the stress of force measurement, the steel rail base is hinged with the piston rod through a spherical hinge, and the force sensor is mounted between the spherical hinge and the piston rod.

In order to avoid electromagnetic interference during the test, the mounting pads and the mounting base are made of non-magnetic conductive materials.

In order to quickly mount and vertically limit the magnetic rail brake, the steel rail is longer than the magnetic rail brake. Working surfaces of the mounting pads are stepped.

In order to ensure the accuracy of the force measurement result, the mounting base is mounted with a linear guide rail which is vertically mounted, and the side surface of the steel rail base is mounted on the linear guide rail to avoid the influence of movement friction on the force measurement process.

In order to make the suction force test of the magnetic rail brake more accurate, roughness of a contact surface of the steel rail and roughness of a contact surface of the magnetic pole of the magnetic rail brake are not greater than Ra1.6.

Based on the same inventive concept, the present invention further provides a suction force testing method for the magnetic rail brake suction force testing system, which includes:
placing the magnetic rail brake onto the mounting pads;
activating the driving cylinder to move the piston rod of the driving cylinder upwards to push the steel rail and, when a distance between the steel rail and the magnetic pole of the magnetic rail brake reaches the normal working clearance of the magnetic pole of the magnetic rail brake, stopping the piston rod;
sending out, by a displacement sensor, an instruction indicating that the steel rail is in place and powering on the magnetic rail brake, such that the steel rail is completely sucked by the magnetic pole of the magnetic rail brake under the action of electromagnetic suction force; and
pressurizing the driving cylinder so that the piston rod of the driving cylinder and the steel rail tend to move away from the magnetic rail brake; during this process, measuring, by the force sensor, the pulling force borne by the steel rail; when the pulling force borne by the steel rail is equal to the suction force of the magnetic pole of the magnetic rail brake and the steel rail is separated from the magnetic pole of the magnetic rail brake, collecting, by the force sensor, a value of the maximum pulling force borne by the steel rail, and taking the value of the maximum pulling force as a suction force of the magnetic rail brake.

Compared with the prior art, the beneficial effects of the present invention are as follows:
1) In the present invention, the integral steel rail is directly pulled by the piston rod of the driving cylinder, and the suction force of the magnetic rail brake is directly obtained by the force sensor. Compared to the traditional magnetic rail brake suction force measuring device, the present invention does not need to first measure an electromagnetic suction force per unit length and then to obtain a total suction force of the entire magnetic rail brake according to the proportional relationship between the unit length and the total length of the magnetic rail brake, and avoids result deviation caused by the difference of magnetic flux densities along the entire length direction of the magnetic rail brake during suction force measurement, so that the measurement result is more accurate and efficient.
2) In order to ensure the accuracy of the force measurement result, the lower part of the steel rail is mounted on the vertical linear guide rail to avoid the influence of movement friction on the force measurement process.
3) The mounting pads and mounting base located around the magnetic pole of the magnetic rail brake are made of non-magnetic conductive materials, which may eliminate the electromagnetic influence and interference of the materials around the magnetic pole on the force measurement of the steel rail during the force measurement process.

### BRIEF DESCRIPTION OF THE DRAWINGS

In order to describe the technical solutions in the embodiments of the present invention or in the prior art more clearly, the following briefly introduces the accompanying drawings required in the embodiments or the prior art. Apparently, the accompanying drawings in the following description show some embodiments of the present invention, and a person of ordinary skill in the art may still derive other drawings from these drawings without any creative effort.
FIG. 1 is a schematic structural diagram of the present invention.
FIG. 2 is a schematic three-dimensional structural diagram of the present invention with a part of the mounting base removed.
FIG. 3 is a top view of FIG. 2.
FIG. 4 is a left view of FIG. 3.

In the figures: 1 - mounting pad, 2 - steel rail, 3 - displacement sensor, 4 - back plate, 5 - linear guide rail, 6 - steel rail base, 7 - driving cylinder, 8 - mounting base, 9 - force sensor, 10 - spherical hinge, 11 - rectangular groove.

### DETAILED DESCRIPTION OF THE EMBODIMENTS

The present invention will be further described below with reference to specific preferred embodiments, but the scope of protection of the present invention is not limited thereby.

For the convenience of description, the relative positional relationships of components, such as upper, lower, left, and right, are described according to the layout directions of the drawings in the specification, and do not limit the structure of this patent.

### Embodiment 1

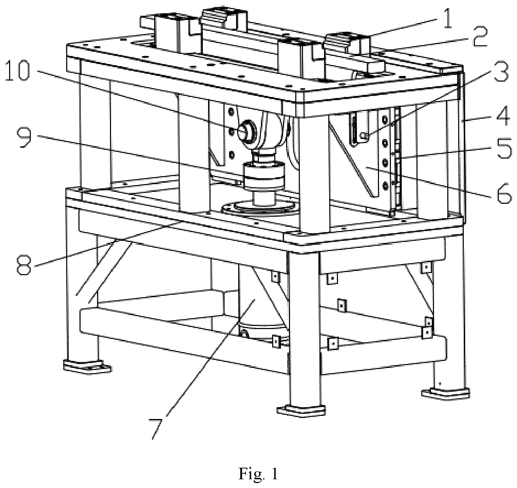

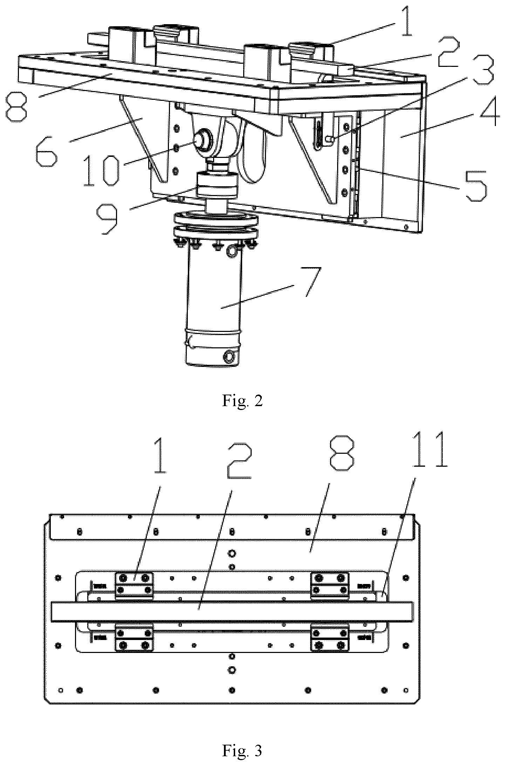

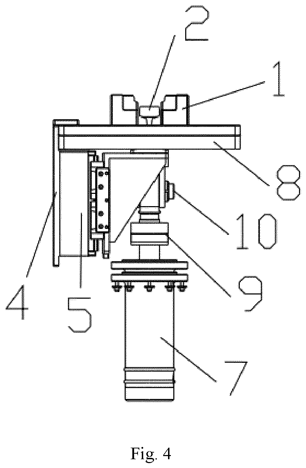

With reference to FIGS. 1 to 4, a first embodiment of a magnetic rail brake suction force testing system of the present invention includes mounting pads 1, a steel rail 2, a displacement sensor 3, a back plate 4, linear guide rails 5, a steel rail base 6, a driving cylinder 7, a mounting base 8, a force sensor 9, and a spherical hinge 10.

A rectangular groove 11 is formed in the middle area of the upper surface of the mounting base 8, and four mounting pads 1 for supporting a magnetic rail brake (not shown) and limiting its vertical movement are symmetrically mounted on the upper surface of the mounting base 8 on two sides of the rectangular groove 11.

A cylinder body of the driving cylinder 7 is vertically mounted at the lower part of the mounting base 8, a piston rod of the driving cylinder 7 is arranged upwards, the steel rail base 6 is hinged to the top of the piston rod of the driving cylinder 7 through the spherical hinge 10, and the integral steel rail 2 is fixedly mounted at the top of the steel rail base 6. The steel rail 2 is movable up and down in the rectangular groove 11 under the driving of the piston rod of the driving cylinder 7. The steel rail 2 can pass through the rectangular groove 11, and can be sucked by a magnetic pole of the magnetic rail brake when reaching a normal working clearance of the magnetic pole of the magnetic rail brake.

The driving cylinder 7 may be an oil cylinder, an air cylinder or an electric push rod. In this embodiment, the driving cylinder 7 is an oil cylinder.

The force sensor 9 is mounted between the spherical hinge 10 and the piston rod of the driving cylinder 7 to directly measure the pulling force borne by the steel rail 2.

The back plate 4 is mounted on the back of the mounting base 8, and a pair of linear guide rails 5 is mounted vertically and in parallel on the front side of the back plate 4. The side surfaces of the steel rail base 6 (the steel rail base 6 is roughly L-shaped) are mounted on the two linear guide rails 5. When the piston rod of the driving cylinder 7 drives the steel rail base 6 to move up and down along the linear guide rails 5, the influence of movement friction on the force measurement process can be avoided.

The displacement sensor 3 for detecting whether a distance between the steel rail 2 and the magnetic pole of the magnetic rail brake reaches the normal working clearance of the magnetic pole of the magnetic rail brake is arranged on the mounting base 8. When the displacement sensor 3 detects that the distance between the steel rail 2 and the magnetic pole of the magnetic rail brake reaches the normal working clearance of the magnetic pole of the magnetic rail brake, it can send a signal to control the magnetic rail brake to be powered on to generate a magnetic field.

In order to avoid electromagnetic interference during the test, the mounting pads 1 and the mounting base 8 are made of non-magnetic conductive materials.

In order to quickly mount and vertically limit the magnetic rail brake, the steel rail 2 is longer than the magnetic rail brake, and the mounting pads 1 are stepped.

In order to make the suction force test of the magnetic rail brake more accurate, roughness of a contact surface of the steel rail 2 and roughness of a contact surface of the magnetic pole of the magnetic rail brake are not greater than Ra1.6.

A suction force testing method for the magnetic rail brake suction force testing system of the present invention includes:
Placing the magnetic rail brake is placed onto the mounting pads 1;
Activating the driving cylinder 7 to move the piston rod of the driving cylinder upwards to push the steel rail 2 and, when a distance between the steel rail 2 and the magnetic pole of the magnetic rail brake reaches the normal working clearance of the magnetic pole of the magnetic rail brake, stopping the piston rod;
Sending out, by the displacement sensor 3, an instruction indicating that the steel rail 2 is in place and powering on the magnetic rail brake, such that the steel rail 2 is completely sucked by the magnetic pole of the magnetic rail brake under the action of electromagnetic suction force;
Pressurizing the driving cylinder 7 so that the piston rod of the driving cylinder and the steel rail 2 tend to move away from the magnetic rail brake; during this process, measuring, by the force sensor 9, the pulling force borne by the steel rail 2; when the pulling force borne by the steel rail 2 is equal to the suction force of the magnetic pole of the magnetic rail brake and the steel rail 2 is separated from the magnetic pole of the magnetic rail brake, collecting, by the force sensor 9, a value of the maximum pulling force borne by the steel rail 2, and taking the value of the maximum pulling force as a suction force of the magnetic rail brake.

The forgoing descriptions are only preferred embodiments of the present application, and do not limit the present application in any form. Although the present application is disclosed above with the preferred embodiments, the present application is not limited thereto. Some variations or modifications made by any skilled person familiar with the art using the disclosed technical contents without departing from the scope of the technical solution of the present application are equivalent to the embodiments, and all fall within the scope of the technical solution.

## Claims

1. A magnetic rail brake suction force testing system, comprising a mounting base (8), wherein a plurality of mounting pads (1) for supporting a magnetic rail brake are mounted at a top of the mounting base (8), a driving cylinder (7) is vertically mounted at a lower part of the mounting base (8), a piston rod of the driving cylinder (7) is arranged upwards, a steel rail (2) is mounted at a top of the piston rod of the driving cylinder (7), and a force sensor (9) is mounted between the steel rail (2) and the piston rod.

2. The magnetic rail brake suction force testing system according to claim 1, wherein a lower part of the steel rail is mounted on a steel rail base (6), and the steel rail base (8) is fixedly connected to the piston rod of the driving cylinder (7).

3. The magnetic rail brake suction force testing system according to claim 2, wherein the steel rail base (6) is hinged with the piston rod through a spherical hinge (10), and the force sensor (9) is mounted between the spherical hinge (10) and the piston rod.

4. The magnetic rail brake suction force testing system according to claim 1, wherein a displacement sensor (3), for detecting whether a distance between the steel rail (2) and a magnetic pole of the magnetic rail brake reaches a normal working clearance of the magnetic pole of the magnetic rail brake, is arranged on the mounting base (8).

5. The magnetic rail brake suction force testing system according to claim 1, wherein the mounting pads (1) and the mounting base (8) are made of non-magnetic conductive materials.

6. The magnetic rail brake suction force testing system according to claim 1, wherein the steel rail (2) is longer than the magnetic rail brake.

7. The magnetic rail brake suction force testing system according to claim 1, wherein working surfaces of the mounting pads (1) are stepped.

8. The magnetic rail brake suction force testing system according to claim 2, wherein the mounting base (8) is mounted with a linear guide rail (5) which is vertically mounted, and a side surface of the steel rail base (6) is mounted on the linear guide rail (5).

9. The magnetic rail brake suction force testing system according to claim 1, wherein roughness of a contact surface of the steel rail (2) and roughness of a contact surface of a magnetic pole of the magnetic rail brake are not greater than Ra1.6.

10. A suction force testing method for the magnetic rail brake suction force testing system according to any one of claims 1-9, wherein the suction force testing method comprises:
placing the magnetic rail brake onto the mounting pads (1);
activating the driving cylinder (7) to move the piston rod of the driving cylinder upwards to push the steel rail (2) and, when a distance between the steel rail (2) and a magnetic pole of the magnetic rail brake reaches a normal working clearance of the magnetic pole of the magnetic rail brake, stopping the piston rod;
sending out, by a displacement sensor (3), an instruction indicating that the steel rail (2) is in place and powering on the magnetic rail brake, such that the steel rail (2) is completely sucked by the magnetic pole of the magnetic rail brake under an action of electromagnetic suction force; and
pressurizing the driving cylinder (7) so that the piston rod of the driving cylinder and the steel rail (2) tend to move away from the magnetic rail brake;
during this process, measuring, by the force sensor (9), the pulling force borne by the steel rail (2);
when the pulling force borne by the steel rail (2) is equal to the suction force of the magnetic pole of the magnetic rail brake and the steel rail (2) is separated from the magnetic pole of the magnetic rail brake, collecting, by the force sensor (3), a value of the maximum pulling force borne by the steel rail (2), and taking the value of the maximum pulling force as a suction force of the magnetic rail brake.
